# EUROPEAN PATENT APPLICATION

(11) **EP 1 935 467 A2**
(43) Date of publication of application: **25.06.2008**
(21) Application number: 06807847.6
(22) Date of filing: 11.07.2006
(51) Int. Cl.: B01D 15/18, G01N 30/88

(54) **METHOD FOR THE ANALYSIS OF PESTICIDE RESIDUES IN PLANT SAMPLES**

(30) Priority: 11.07.2005 ES 200501686
(71) Applicant: Universidad de Castilla-La Mancha, 02071 Albacete (ES)
(72) Inventor: VILLEN ALTAMIRANO, Jesus Campus Universitario, E-02071 Albacete (ES); VAZQUEZ MOLINI, Ana Maria Campus Universitario, E-02071 Albacete (ES); CORTES SIMARRO, Jose Manuel Campus Universitario, E-02071 Albacete (ES); SANCHEZ SANTIAGO, Raquel Campus Universitario, E-02071 Albacete (ES)
(74) Representative: Carpintero Lopez, Francisco
(86) International application number: PCT/ES2006/000394
(87) International publication number: WO 2007/006830

(57) **Abstract**

The invention relates to an analysis method for pesticide residues in plants. The method uses the interface device for the direct coupling of liquid chromatography and gas chromatography, called the TOTAD (Through Oven Transfer Adsorption Desorption) interface in scientific literature. The method only requires an extraction step prior to the chromatographic analysis. The pesticides are extracted from the sample with an organic solvent. Extract volumes that are much larger than those usually used are directly injected into the gas chromatograph, without needing any prior extract cleaning or concentration step. The TOTAD interface allows injecting extract volumes that are much larger than those normally injected into the gas chromatograph.

## Description

### Field of the Invention

Analytical Chemistry. Food Technology.

### Background

The control of diseases and pests in plant cultivation makes it necessary to use plant protection products which can cause residues in such plants. These pesticides, especially in the case of liposoluble pesticides, can be concentrated in the human body due to the regular consumption of plants. It is therefore necessary to have fast, sensitive and reliable methods which allow controlling said residues.

Gas chromatography (GC) has been the analytical technique which has been most frequently used in the determination of pesticide residues in plants with different selective detectors (L.V. Podhorniak, J.F., Negron, F.D. Griffith Jr., J. Assoc. Off Anal. Chem. Int. 2001, 84, 873-890; E.Ueno, H. Oshima, I. Saito, H. Matsumoto, J. Assoc. Off Anal. Chem. Int. 2003, 86, 1241-1251) and more recently, coupled to mass spectrometry (E. Ueno, H. Oshima, I. Saito, H. Matsumoto, Y. Yoshimura, H. Nakazawa J. Assoc. Off Anal. Chem. Int. 2004, 87, 1003-1015; J. L. Martinez-Vidal, F.J. Arrebola, M. Mateu-Sanchez, J. Chromatogr. A, 2002, 959, 203-213). The use of GC requires that the analyte be sufficiently volatile. In the determination of less volatile or thermolabile pesticides, such as carbamates, methods based on liquid chromatography (LC) (C. Sanchez-Brunete, B. Albero, J. L. Tadeo, J. Food Protec. 2004, 67, 2565-2569) and on the coupling of liquid chromatography and mass spectrometry (LC-MS) (D. Ortelli, P. Edder, C. Corvi, Ana. Chim. Acta, 2004, 520, 33-45; C. Jansson, T. Pihlstr6m, B.G. Österdahl, K.E. Markides, J. Chromatogr. A, 2004, 1023, 93-104) have been used.

Pesticide residues are usually analyzed according to the official method (AOAC Official Method 985.22) involving extraction with acetone, followed by partitioning with petroleum ether and dichloromethane, the subsequent concentration of the extract obtained and its analysis by means of gas chromatography with different detectors (GC-ECD, GC-NPD and GC-MS) *(*Official Methods of Analysis, 2000 17th Ed., AOAC INTERNATIONAL, Gaithersburg, MD)

Solvents different from acetone have been used to extract pesticides from the matrix, such as acetonitrile (S.M. Lee, M.L. Papathakis, C.F. Hsiao-Ming, J.E. Carr, J. Anal. Chem., 1991, 339, 376-383; W. Liao, T. Joe, W.G. Cusick, J. Assoc. Off Anal. Chem. Int., 1991, 74, 554-565) or ethyl acetate (D.M. Holstege, D.L. Scharberg, E.R. Tor, L.C. Hart, F.D. Galey, J. Assoc. Off Anal. Chem. Int., 1994, 77, 1263-1274; A.R. Fernández Alba, A. Valverde, A. Aguera, M. Contreras, J. Chromatogr. A, 1994, 686, 263-274). The use of solvents that are partially miscible with water makes it necessary to carry out a partitioning step to remove the water content coming from the plant matrix from the extract. Different solvents have been used such as petroleum ether or dichloromethane, as well as mixtures thereof such as ethyl acetate-cyclohexane (A. Sannino, M. Bandini, L. Bonzoni, J. Assoc. Off Anal. Chem. Int. 2003, 86(1), 101-108; L.V. Podhorniak, J.F. Negron, F.D. Griffith Jr., J. Assoc. Off Anal. Chem. Int., 2001, 84(3), 873-890; W. Specht, S. Pelz, W. Gilsbach, J. Anal. Chem., 1995, 353, 183-190) or dichloromethane-petroleum ether (M. Gamon, C. Lleo, A. Ten, F. Mocholí, J. Assoc. Off Anal. Chem. Int., 2001, 84(4), 1209-1216). It is frequently necessary to clean the extract prior to the chromatographic analysis. The cleaning step can be carried out by adsorption chromatography using florisil, alumina or silica gel (A. Sannino, M. Bandini, L. Bolzoni, J. Assoc. Off Anal. Chem. Int., 2003, 86, 101-108), gel permeation chromatography (GPC) (A. Sannino, M. Bandini, L. Bolzoni, J. Assoc. Off Anal. Chem. Int., 1999, 82, 1229-1238) and solid-phase extraction (SPE) (L.V. Podhorniak, J.F. Negron, F.D. Griffith Jr., J. Assoc. Off Anal. Chem. Int., 2001, 84(3), 873-890)

The analysis of the considered groups of compounds has a series of drawbacks essentially affecting the extraction, partitioning and extract cleaning step. Firstly, the time required to prepare the sample is long, which forms an important drawback in certain cases. It is furthermore necessary to use relatively high volumes of toxic organic solvents, with the subsequent health risk for the analyst and the harmful effects involved in relation to the environmental impact. In addition, impurities from the solvent or from the materials used can be introduced during the entire process, which impurities are subsequently concentrated together with the analytes and give rise to interferences and analytical errors and finally, to deficient analyses as regards their selectivity and sensitivity.

There are several alternatives to using large amounts of organic solvents, such as supercritical fluid extraction (SFE) in which the extraction conditions can be selected so as to achieve a more selective extraction that does not require carrying out the cleaning step before the chromatographic analysis (S.J. Lehotay, J. Chromatogr. A, 1997, 785, 289-312; A. Valverde-Garcia, A.R. Fernández Alba, A. Agüera, M. Contreras, J. Assoc. Off Anal. Chem. Int., 1995, 78, 867-873) or such as matrix sold-phase dispersion extraction (E. Viana, J.C Molto, G. Font J. Chromatogr. A, 1996, 754, 437-444; M. Anastassiades, S.J. Lehotay, D. Stajnbaher, F.J. Schenk, J. Assoc. Off Anal. Chem. Int., 2003, 86(2), 412-431) or stir bar sorptive extraction (P. Sandra; B. Tienpont, F. David., J. Cromatogr. A, 2003, 1000, 299-309)

The establishment of increasingly lower maximum residue limits (MRLs) in the European legislation (European Council Directives 76/895 EEC, 86/363/EEC and 90/642/EEC) has made it necessary to improve the detection limits of the multiresidue methods used. The use of the technique of injecting large volumes is an alternative for being able to reach these increasingly more demanding detection limits. Several techniques have been developed for allowing the injection of up to several hundreds of microliters in gas chromatography while at the same time good chromatographic characteristics are maintained (F.J. López, J. Beltran, M. Forcada and F. Hernández., J. Chromatogr. A, 1998, 823, 25-33). 10 µL of sample in the analysis of pesticides in plants have been injected by using a conventional injector with/without flow split (A. Agüera, M. Contreras, J. Crespo, A.R. Fernández-Alba, Analyst, 2002, 127(3), 347-354; A. Agüera, L. Piedra, M.D. Hernando, A.R. Fernández Alba, M. Contreras, Analyst, 2000, 125(8), 1397-1402). Programmed temperature vaporizer injector (PTV) has also been used by filling the glass tube thereof with carbofrit (M. Gamón, C. Lleó, A. Ten, F. Mocholí, J. Assoc. Off Anal. Chem. Int., 2001, 84(4), 1209-1216). In this case, the initial temperature of the injector must be maintained at the boiling temperature of the solvent while the flow split is open. After a certain time period, the flow split is closed and the injector is heated so that the analytes pass to the gas chromatograph column. In this technique, the solvent is removed in an evaporative manner through the flow split, therefore this way of actuating the PTV is only recommended for determining solutes with a high boiling point because more volatile solutes are lost due to evaporation together with the solvent. A modification of this way of operating with PTV has been described, in which the gas chromatograph column is disconnected from the body of the injector before introducing the sample, and the solvent is removed, both in an evaporative and non-evaporative manner, through the rear part of the injector (J. Villén, F.J. Señorans, M. Herraiz, G. Reglero, J. Tabera; J. Chromatogr. Sci., 1992, 30, 261-266)

The TOTAD (Through Oven Transfer Adsorption Desorption) interface (Spanish patent number ES 2 152-153; patent in USA 6,402,947 B1) or the improved system (Spanish patent number P200501284) is based on a PTV injector, which has been widely modified, and a series of opening and closing valves as well as a six-way valve. The modifications affect the pneumatic system, the introduction of the sample, the removal of the solvent and the operating mode (M. Pérez, J. Alario, A. Vázquez, J. Villén, J. Microcol Sep., 1999, 11(8), 582-589). The TOTAD interface has proved to be effective for the direct coupling with liquid chromatography and gas chromatography when working both in normal phase and in reverse phase in liquid chromatography. It can also be used for introducing large sample volumes in gas chromatography. The TOTAD interface has been used in the analysis of pesticide residues by direct coupling with liquid chromatography and gas chromatography, in water (M. Pérez, J. Alario, A. Vázquez, J. Villén, J. Microcol. Sep. 1999, 11 (8), 582-589; M. Pérez, J. Alario, A. Vázquez, J. Villén, Anal. Chem. 2000, 72, 846-852) and in olive oil (R. Sánchez, A. Vázquez, J. Villén, J. C. Andini, J. Chromatogr. A, 2004, 1029, 167-172; R. Sánchez, A. Vázquez, D. Riquelme and J. Villén, J. Agric. Food Chem., 2003, 51, 6098-6102) and in the analysis of pesticide residues in water by introducing large sample volumes (J. Alario, M. Pérez, A. Vázquez, J. Villén, J. Chromatogr. Sci., 2001, 39, 65-69).

### Brief Description of the Invention

The method uses the interface device for the direct coupling of liquid chromatography and gas chromatography (Spanish patent number ES 2 152-153; patent in USA 6,402,947 B1, licensed to the company KONIK-Tech, Sant Cugat del Vallés, Barcelona); or the improved system (Spanish patent number P200501284), called TOTAD interface (Through Oven Transfer Adsorption Desorption) in the scientific literature, for injecting large volumes in the gas chromatograph. The gas chromatograph is equipped with the TOTAD interface, which is completely automatic. The TOTAD interface is joined to the injection valve and allows introducing variable sample volumes pushed by a solvent by means of a liquid chromatography pump.

The pesticides are extracted from the previously ground plant sample using small amounts of organic solvent. Once it has been filtered, the obtained extract is introduced in the injection valve which is directly connected to the six-way valve of the TOTAD interface by means of a tube. A pump joined to the injection valve automatically transfers the extract volume from the injection valve, by means of the TOTAD interface, to the gas chromatography column. The solvents used can be both polar and apolar solvents. The flow rate at which the transfer to the gas chromatograph occurs can vary. The adsorbent placed in the inner tube of the interface retains the pesticides and the solvent is removed entrained by the gas stream through the tube or capillary connected to the opposite end of the interface. During the analyte adsorption step, gas flows controlled by both gas inlets of the TOTAD interface are introduced. Once the solvent has been removed, the analytes are thermally desorbed. During the analyte desorption step, the controlled gas flow enters exclusively through the conventional gas inlet into an injector with programmed temperature (PTV) entraining the desorbed analytes, leading them to the gas chromatograph column in which the chromatographic analysis takes place. The control of the opening and closing times of the different opening and closing valves and of the six-way valve, forming part of the TOTAD interface, as well as of the gas flows through both gas inlets of the TOTAD interface, is essential for the correct operation of the analysis method.

The analysis method allows injecting different extract volumes, which modifies the opening and closing times of the valves forming the interface.

### Detailed Description of the Invention

The analysis method object of the invention is based on the injection of extract volumes greater than the usual volumes in gas chromatography, for which it uses the interface device for the direct coupling of liquid chromatography and gas chromatography (Spanish patent number ES 2 152-153; patent in USA 6,402,947 B1, licensed to the company KONIK-Tech, Sant Cugat del Vallés, Barcelona) or the improved system (Spanish patent number P200501284) called TOTAD interface (Through Oven Transfer Adsorption Desorption) in the scientific literature.

The method, except for the extraction step, is completely automatic. The opening and closing valves and the six-way valve of the TOTAD interface are electrovalves which are controlled from the computer software.

The method consists of two clearly distinguished stages. A first stage in which the pesticides are extracted from the sample and a second stage forming the chromatographic analysis of the extracted pesticides.

### First Stage: Extraction of the pesticides from the sample with small amounts of organic solvents.

An amount of sample that is sufficient to allow the homogeneity thereof is ground. A small aliquot of the ground and homogenized sample is taken and a small amount of organic solvent is added to it, variable amounts of salts favoring the extraction of the most polar pesticides also being able to be added. The mixture is kept with stirring during the time necessary for the extraction. The separation of the two aqueous and organic phases is then allowed, collecting the organic phase and filtering it.

### Second Stage: Chromatographic analysis of the pesticides in the obtained extract.

In this stage, the inner tube of the TOTAD interface is filled with an adsorbent material with a certain length, with a system preventing the movement of the adsorbent. The adsorbent material can be any material retaining the pesticides and allowing the passage of the carrier gas and of the liquid that must traverse it.

The pump pushing the solvent is connected to the injection valve and the latter to the six-way valve by means of a tube. The six-way valve is in turn connected by means of another tube inserted in the inner tube of the TOTAD interface, such that a length greater than the end of the capillary gas chromatography column which has been introduced through this same end is introduced.

Five steps are distinguished during the analysis stage:
1) Stabilization: Before starting the injection, the TOTAD interface is stabilized at the temperature at which the injection is to be carried out, which must be the suitable temperature for the pesticides to be retained in the adsorbent filling the inner tube of the interface and for achieving the removal of the solvent. The gas circulates through said tube entering through the two gas inlets of the interface. Valve EV1 of the interface is closed and EV2 is open (EV1 and EV2 correspond to the nomenclature used in Spanish patent number ES 2 152-153).
2) injection: The extract of the sample to be analyzed is injected into the injection valve. The injection valve is actuated, whereby the injected extract is pushed by the solvent, driven by the pump towards the six-way valve.
3) Transfer of the extract to GC: The six-way valve changes its position automatically. The gas flow traversing the adsorbent pushes the extract therethrough. The pesticides are retained whereas the solvent is removed, completely or partially evaporated, through the outlet tube. The solvent flow can have different values for the purpose of improving the retaining of the pesticides in the adsorbent.
4) Removal of solvent remains: Once the step of the transfer of the extract to GC has ended, the six-way valve changes its position automatically and valve EV1 is opened. At the same time, the solvent remains located in the inner tube of the TOTAD interface, as well as those remaining in the capillary tube joining the six-way valve with the inner tube of the TOTAD interface are removed. These conditions are maintained for the necessary time so that the solvent is removed such that the remains do not interfere in the gas chromatography.
5) Thermal desorption: After the time necessary for removing the solvent has elapsed, the opening and closing electrovalves forming part of the TOTAD interface (EV1 and EV2) are closed. The helium flow entry through the inlet traversing the adsorbent is also closed, and if necessary, the flow or pressure through the other inlet is modified to the suitable value, such that the gas now entering only through the inlet located at the outer part of the interface traverses the adsorbent and leaves only through the gas chromatography column. At this time, the injector is quickly heated to the temperature necessary for causing the thermal desorption of the pesticides, which are entrained by the helium stream to the chromatographic column, in which the chromatographic analysis takes place in the previously programmed conditions.

The method object of the invention has the following advantages:
- The method object of the invention can be used for the multiresidue analysis of pesticides in a single analysis.
- The method object of the invention allows analyzing pesticide residues in plant samples without any prior sample treatment other than extraction.
- The method object of the invention does not require the use of large amounts of organic solvents that are harmful for the health of the analyst and for the environment.
- The method object of the invention only needs the handling of the sample by the analyst in the extraction step, therefore it reduces errors and contamination caused in said handling.
- The method object of the invention includes an extraction step which is fast and an analysis step which is completely automatic, therefore it is especially suitable for analyzing pesticide residues in routine controls.
- The method object of the invention allows injecting into the chromatographic system extract volumes greater than those usually injected in gas chromatography, which can be variable, which allows eliminating the extract concentration step giving rise to an increase of the sensitivity and to an improvement in the detection limits.
- The method object of the invention allows using the inner tube of the TOTAD interface filled with the adsorbent material a number of times, without having to be substituted.
- The deterioration of the gas chromatography system due to the introduction therein of aggressive solvents for such system does not occur in the method object of the invention because they are previously removed.
- The method object of the invention allows using different detection systems in gas chromatography.
- The total time of the analysis of the method object of the invention is significantly shorter than the time required when the conventional method is used.

### Detailed Description of the Drawings

Chromatogram corresponding to the analysis of a tomato sample which was fortified at 0.05 mg/kg with each of the following pesticides: dimethoate, diazinon, fenitrothion, malathion, fenthion, chlorpyrifos, chlorfenvinphos, methidathion, tetrachlorvinphos. The extraction conditions as well as the conditions in which the chromatogram have been obtained are indicated in the embodiment of the invention. The injected extract volume was 50 µL and the solvent flow to which the transfer was made was 0.1 mL/min. The time indicated in the gas chromatogram corresponds only to the analysis time of the gas chromatograph. The identification of the peaks is the following: 1) dimethoate 2) diazinon 3) fenitrothion 4) malathion 5) fenthion 6) chlorpyrifos 7) chlorfenvinphos 8) methidathion and 9) tetrachlorvinphos. Embodiment of the Invention

The analysis has been carried out using a quaternary pump (HP model 1100), a manual injection valve (model 7125 Rehodyne, CA) with a 50 µL loop and a gas chromatograph (Konik model HRGC 4000B) equipped with a Nitrogen-Phosphorus detector and TOTAD interface

The TOTAD interface is placed horizontally on the left side of the gas chromatograph. The EZchrom software (Konik, Sant Cugat del Vallés, Barcelona) allows handling the interface from the computer and obtaining data from the gas chromatograph.

The gas chromatography column used is a capillary fused silica column with a length of 30 m and an inner diameter of 0.32 mm, filled with 5% of phenylmethylsilicone with a thickness of 0.25 µm

### First Stage of the Method

A tomato sample bought in the market was ground and homogenized. 2.5 g of this sample were taken and fortified adding 125 µL of a solution of pesticides in methanol at 1 mg/L, thus achieving a fortified sample with 0.05 mg/kg of tomato of each of the following pesticides: dimethoate, diazinon, fenitrothion, malathion, fenthion, chlorpyrifos, chlorfenvinphos, methidathion, tetrachlorvinphos, obtained from Chem. Service Inc. (West Chester PA,SA). Once the sample was fortified, 2g of anhydrous sodium sulfate and 5 mL of ethyl acetate were added. This mixture was stirred for one minute and was allowed to settle, the separation between the organic and aqueous phase occurring. The organic phase (upper phase) was extracted with a syringe and filtered through a 0.22 µm filter (Millex-GN SLGN 013 NL).

### Second Stage of the Method

The inner tube of the TOTAD interface with an inner diameter of 2 mm and a length of 10 cm was filled with 1 cm of Tenax TA 80-100 mesh (Chrompack, Mieddelburg, Holland) secured at both ends with glass wool, to prevent the movement of the Tenax. Once it has been filled, it was conditioned with a helium flow of 500 mL/min traversing the adsorbent and was heated from 50°C to 350°C at 50°C/10min and maintained for 60 min at the final temperature.

During the five steps of the analysis stage, the following conditions were used
1) Stabilization: The interface was stabilized at 100 °C. The helium flow was 500 mL/min through both inlets. The temperature of the gas chromatograph oven was maintained at 40°C.
2) injection: An aliquot of the extract was introduced into the liquid chromatography injection valve (Rehodyne 7125 valve) which had a 50 µL loop. The solvent flow was maintained at 0.1 mL/min. The solvent used was ethyl acetate.
3) Transfer of the extract to GC: The six-way valve switched and the solution was driven by the liquid chromatography pump into the inner tube of the interface at a flow of 0.1 mL/min. The analytes were retained in the adsorbent and the solvent was removed, entrained by the helium.
4) Removal of solvent remains: The transfer step ended after 1 min 40 s. At this time, the six-way valve was changed, whereby the solvent driven by the liquid chromatography pump of the valve was sent to waste. The solvent remaining in the transfer tube was also pushed to waste by the helium flow. These conditions were maintained for 2 min to assure the removal of the solvent remains of the inner tube of the TOTAD interface and of the transfer tube.
5) Thermal desorption: The opening and closing valves of the interface were closed after 3 min 40 s. The helium flow traversing the adsorbent was interrupted and the pressure through the other inlet was changed such that a flow rate 1.8 mL/min circulated through the column. The interface was heated to 275 °C. The pesticides were desorbed and pushed by the helium flow to the gas chromatograph column. The chromatographic according to the program indicated below started after 4 min 10 s.

The conditions of the chromatographic analysis are as follows: the column was maintained at 40°C for 1 min, the temperature was then increased to 170°C at 20 °C/min, later at 3 °C/min to 210°C and at 5°C/min to 230°C, maintaining this final temperature for 5 minutes. The temperature of the Nitrogen-Phosphorus detector was maintained at 250 °C. During the injection and solvent elimination steps, the temperature of the gas chromatograph oven was maintained at 40°C.

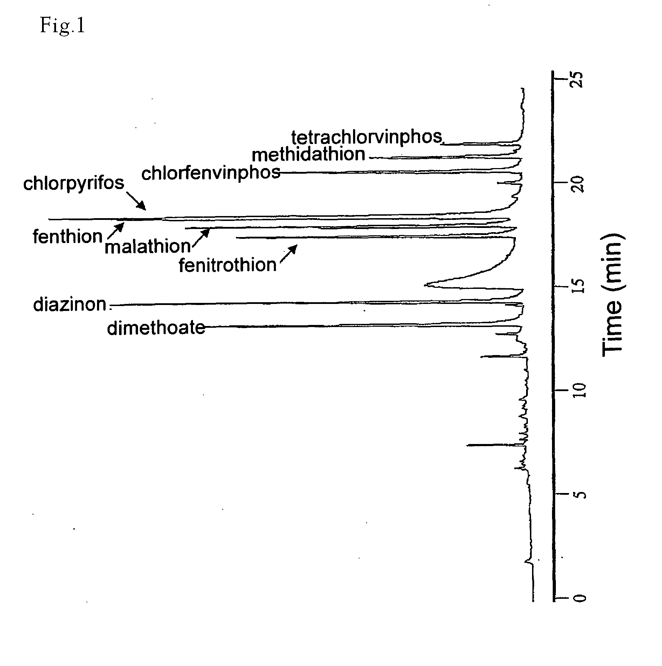

## Claims

1. An analysis method for pesticide residues in plant samples, comprising the following steps:
a. extraction of the pesticides from the sample; and
b. chromatographic analysis of the extracted pesticides,
**characterized by** the use of the TOTAD (Through Oven Transfer Adsorption Desorption) interface.

2. An analysis method according to claim 1, **characterized in that** the solvents used in extraction step a) can be polar or apolar.

3. An analysis method according to claims 1 or 2, **characterized in that** it allows injecting very large extract volumes.

4. An analysis method according to claim 3, **characterized in that** the injected extract volume is 50 µL.

5. An analysis method according to any of the previous claims,
**characterized in that** the extract obtained in step a) does not require any additional partitioning, cleaning or concentration step.

6. An analysis method according to any of the previous claims,
**characterized in that** the extract obtained in a) is automatically transferred to the gas chromatograph.

7. An analysis method according to any of the previous claims,
**characterized in that** analysis step b) is completely automatic.

8. An analysis method according to any of the previous claims,
**characterized in that** the inner tube of the interface is filled with an adsorbent material.

9. An analysis method according to any of the previous claims,
**characterized in that** solvents are removed before introducing the extract in the gas chromatography column.

10. An analysis method according to any of the previous claims,
**characterized in that** it allows the multiresidue analysis of pesticides in a single analysis.
